# DEMANDE DE BREVET EUROPEEN

(11) **EP 3 453 576 A1**
(43) Date de publication de la demande: **13.03.2019**
(21) Numéro de dépôt: 18192944.9
(22) Date de dépôt: 06.09.2018
(51) Int. Cl.: B60R 21/216

(54) **DISPOSITIF DE FIXATION D'UN MONTANT DE BAIE ÉQUIPÉ D'UN AIRBAG**

(30) Priorité: 07.09.2017 FR 1758237
(71) Demandeur: RENAULT s.a.s., 92100 Boulogne-Billancourt (FR)
(72) Inventeur: BOUILLON, JEAN-CHARLES, 78940 LA QUEUE LEZ YVELINES (FR)

(57) **Abrégé**

Dispositif de fixation d'un montant d'habillage (M) d'habitacle d'un véhicule automobile, en particulier un montant de baie, à une paroi de caisse (T) du véhicule, en particulier d'un brancard de véhicule, un coussin de sécurité gonflable (C) étant présent sous ledit montant, ledit dispositif comprenant une agrafe de fixation coopérant avec une structure porte-agrafe solidaire dudit montant d'habillage, ladite agrafe étant du type présentant une première portion munie de harpons aptes à s'encliqueter dans la paroi de caisse, une deuxième portion (2) apte à s'encliqueter dans un orifice d'accueil de la structure porte-agrafe, qui se caractérise en ce que cette deuxième portion comprend deux lames (20, 21), élastiquement déformables, présentant chacune une extrémité distale et une extrémité proximale et une nervure d'encliquetage(200, 201) située entre lesdites extrémités, lesdites lames étant montées en opposition de part et d'autre et solidairement d'un barreau support (22) de manière de manière à rendre lesdites lames radialement compressibles, l'extrémité proximale de chaque lame étant située à proximité de moyens de butée transversaux (23) apte à venir en appui contre la surface d'accueil autour de l'orifice d'accueil (900).

## Description

La présente invention se rapporte à un dispositif de fixation d'une pièce d'habillage dans l'habitacle d'un véhicule automobile, sous laquelle est présent un coussin de sécurité gonflable et apte à livrer passage à ce coussin en train de se gonfler. Plus particulièrement l'invention se rapporte à un dispositif de fixation d'un montant de baie d'un véhicule automobile au brancard de caisse, équipé d'un coussin de sécurité gonflable passant sous le montant de baie.

Un véhicule automobile est équipé de divers coussins de sécurité gonflables pour protéger les passagers en cas de chocs. Dans un niveau de sécurité élevé, un coussin de sécurité gonflable pour protéger notamment la tête des passagers est installé au niveau d'au moins un brancard du véhicule, et il passe sous le montant de baie qui forme la pièce d'habillage de la partie de brancard, en bordure de la baie de pare-brise, allant de la planche de bord jusqu'à la naissance du pavillon. Le montant de baie est fixé à la paroi du brancard dans une zone à la croisée du haut de la partie transversale du pare-brise et du haut de la portière avant.

Le coussin de sécurité gonflable d'un montant de baie est un sac de forme allongée et d'une longueur plus ou moins importante selon les normes des pays et les cahiers des charges des constructeurs automobiles. En général ledit coussin gonflable s'étend suivant une partie sensiblement horizontale du brancard, au-dessus des portières du véhicule, et peut le cas échéant se prolonger jusqu'à venir sur une partie de brancard qui borde latéralement le pare-brise. Le montant de baie de pare-brise qui est monté à l'intérieur de l'habitacle du véhicule doit être apte à s'ouvrir pour permettre au coussin en train de se gonfler de se projeter hors dudit montant de baie, en cas de choc violent sur le véhicule, et en même temps ledit montant doit être retenu lors de son ouverture pour ne pas venir heurter un passager. Un montant de baie est fixé au brancard de caisse du véhicule par un dispositif de fixation spécifique dans lequel une agrafe de fixation coopère avec une structure porte-agrafe réceptrice de ladite agrafe et solidaire du montant de baie.

Classiquement la structure porte-agrafe, réceptrice de l'agrafe de fixation, est une structure intégrée au montant de baie, qui comprend un orifice d'accueil de ladite agrafe. On connaît des agrafes de fixation qui comportent une première portion qui se fixe dans la paroi du brancard par encliquetage, en particulier grâce à des harpons encliquetables, une deuxième portion apte à s'encliqueter dans l'orifice du porte-agrafe et à se désencliqueter de cet orifice sous la poussée du coussin de sécurité qui se gonfle en cas de choc sur le véhicule, rendant une partie de l'agrafe mobile dans le porte-agrafe, la première portion de l'agrafe restant fixée au brancard, pour permettre au montant de baie de s'ouvrir grâce à une troisième portion de dévidage sous forme d'une sangle et à une quatrième portion formée d'un organe de retenue, qui peut avoir une forme de V, maintenant le lien entre le porte-agrafe et l'agrafe. La portion de dévidage permet de contrôler l'amplitude de l'ouverture du montant de baie, la longueur de la sangle de dévidage donnant l'ampleur requise à l'ouverture du montant de baie retenu qui s'entrebâille ainsi sans s'ouvrir totalement sous la poussée du coussin de sécurité qui se déploie.

Il a été observé que la structure porte-agrafe coopérant avec l'agrafe ou que la sangle de dévidage peuvent casser sous la poussée du coussin de sécurité qui se gonfle, ou encore que l'organe de retenue peut passer à travers l'orifice d'accueil. Le montant de baie peut donc être insuffisamment retenu au brancard et venir heurter les passagers. Les dispositifs de fixation actuels des montants de baie peuvent donc poser des problèmes de fiabilité, de solidité et donc de sécurité pour les passagers, d'autant que la tendance est à concevoir des coussins de sécurité gonflables plus longs et/ou aptes à avoir une poussée plus forte pour augmenter leur vitesse de déploiement. La deuxième portion d'encliquetage de l'agrafe de fixation dans l'orifice d'accueil peut être en partie à l'origine des inconvénients ci-avant si elle ne présente pas les qualités requises pour une bonne fixation par encliquetage. Ces qualités sont notamment de pouvoir se désencliqueter de l'orifice d'accueil dans une plage d'efforts prévisibles, à savoir que l'encliquetage doit être assez fort pour garantir la fixation de la pièce d'habillage tout en étant suffisamment faible pour libérer le montant de baie dès le début du gonflement du coussin de sécurité.

L'invention vise à résoudre au moins en partie les inconvénients évoqués ci-dessus. Elle vise à proposer un dispositif de fixation dont l'agrafe de fixation présente notamment les qualités requises pour un bon encliquetage dans l'orifice d'accueil de la structure porte-agrafe.

A cet effet l'invention fournit un dispositif de fixation d'un montant d'habillage d'un véhicule automobile, en particulier un montant de baie, à une paroi de caisse du véhicule, en particulier une paroi de brancard, un coussin de sécurité gonflable étant présent sous ledit montant, ledit dispositif comprenant une agrafe de fixation coopérant avec une structure porte-agrafe, ladite agrafe étant apte à se solidariser d'une part à ladite paroi de caisse et d'autre part à ladite structure porte-agrafe solidaire dudit montant d'habillage, ladite agrafe étant du type présentant une première portion munie de harpons aptes à s'encliqueter dans la paroi de caisse, une deuxième portion apte à s'encliqueter dans un orifice d'accueil de la structure porte-agrafe, une troisième portion de dévidage prolongée d'une quatrième portion sous forme d'un organe de retenue apte à retenir l'agrafe à la structure porte-agrafe lorsque la deuxième portion est libérée de l'orifice d'accueil sous la poussée du coussin de sécurité qui se gonfle pour permettre une ouverture du montant d'habillage, et livrer passage au coussin de sécurité en déploiement, l'amplitude de l'ouverture dudit montant étant contrôlée par ladite troisième portion de dévidage de l'agrafe. Selon l'invention, ledit dispositif se caractérise en ce que la deuxième portion d'agrafe, apte à s'encliqueter dans un orifice d'accueil de la structure porte-agrafe, comprend deux lames longitudinales, élastiquement déformables, présentant chacune une extrémité distale et une extrémité proximale et une nervure transversale d'encliquetage située entre lesdites extrémités, lesdites lames étant montées en opposition de part et d'autre et solidairement d'un barreau support de manière à rendre lesdites lames radialement compressibles, l'extrémité proximale de chaque lame étant située à proximité de moyens de butée transversaux apte à venir en appui contre la surface d'accueil autour de l'orifice d'accueil une fois l'agrafe encliquetée dans ledit orifice d'accueil.

En particulier lesdites lames sont agencées de manière à laisser un espace libre entre ledit barreau et au moins la partie de lame située entre les extrémités de ladite lame. En particulier les moyens de butée transversaux se présentent sous forme d'une plaque.

Selon un mode particulier de réalisation de l'invention, chaque lame de la deuxième portion de l'agrafe est solidaire du barreau support en ses extrémités proximale et distale de forme courbe, définissant ainsi un espace libre entre chaque lame et le barreau support permettant la compressibilité radiale de l'ensemble des deux lames en opposition lorsque l'agrafe est insérée dans l'orifice d'accueil de la structure porte-agrafe et permettre son encliquetage après passage de la nervure de lame dans l'orifice d'accueil de la structure porte-agrafe.

Selon une variante de réalisation de l'invention, chaque lame de la deuxième portion de l'agrafe n'est solidaire du barreau support qu'en son extrémité distale courbe, l'extrémité proximale étant libre. Ainsi les lames espacées du barreau support présentent une flexibilité importante en leur extrémité libre, ce qui leur confère une grande adaptabilité à diverses formes de bords de l'orifice d'accueil de la structure porte-agrafe.

Avantageusement aussi selon l'invention, la troisième portion de dévidage de l'agrafe est formée par une tige, de préférence avec un profil en croix sur toute sa longueur (pour garantir les propriétés mécaniques de la tige après l'injection), et de préférence composée de plusieurs branches, en particulier agencées en croix. La tige est relativement volumineuse dans sa dimension transversale, et de préférence sa section transversale s'inscrit dans un cercle d'un diamètre compris entre 7 et 8 millimètres. La tige présente ainsi à la fois de la résistance mécanique et de la flexibilité.

De préférence selon l'invention, la quatrième portion de l'agrafe présente un organe de retenue constituée d'une tête de forme rectangulaire, et ladite tête est disposée au bout de la tige de sorte que ses plus grands côtés sont sensiblement dans un plan formant un angle avec l'axe longitudinal de ladite tige ayant une amplitude comprise entre 30 et 90 degrés.

Préférentiellement la tête de retenue est inclinée vers la tige de sorte que ses plus grands côtés sont sensiblement dans un plan formant un angle avec l'axe longitudinal de ladite tige ayant une amplitude comprise entre 30 et 80 degrés, de préférence entre 30 et 70 degrés. Ceci permet que la tête, dont la face externe rectangulaire est de préférence convexe, se loge au mieux à l'arrière du porte-agrafe, et le cas échéant que la face externe de la tête respecte au mieux la courbure interne du montant d'habillage.

En particulier selon l'invention, la structure porte-agrafe du dispositif de fixation comprend un orifice d'accueil de l'agrafe de forme rectangulaire apte à laisser passer la tête de retenue de l'agrafe introduite en présentant les côtés de plus grande dimension de ladite tête parallèlement aux bords de plus grand dimension de l'orifice, et apte à retenir ladite agrafe une fois pivotée sur elle-même autour de son axe longitudinal (A-A) suivant un mouvement de rotation de 90 degrés dans le plan de l'orifice et un mouvement de translation suivant la direction axiale de l'orifice amenant ladite agrafe à travers ledit orifice d'accueil jusqu'à encliquetage des nervures des lames d'encliquetage de la deuxième portion de l'agrafe, les moyens de butée de la deuxième portion venant en appui contre la face d'accueil autour dudit orifice, les côtés de plus grande dimension de ladite tête devenant alors perpendiculaires aux bords de plus grand dimension dudit orifice. L'agrafe est encliquetée dans le porte-agrafe suivant un assemblage de type quart de tour, les côtés de plus grande dimension de la tête de l'agrafe se retrouvent alors parallèles aux bords de plus petite dimension de l'orifice.

Avantageusement selon l'invention, la face d'accueil autour de l'orifice d'accueil de la structure porte-agrafe présente une forme d'accueil apte à loger une partie en saillie des moyens de butée de l'agrafe de forme similaire à celle de l'intérieur de la forme d'accueil. En particulier selon ce mode de réalisation, la structure porte-agrafe comprend une nervure de renfort, disposée autour de l'orifice d'accueil sur la face d'accueil contre laquelle viennent s'appuyer les moyens de butée de la deuxième portion de l'agrafe une fois encliquetée. Ladite nervure de renfort inclut une forme d'accueil de ladite partie en saillie des moyens de butée de la deuxième portion de l'agrafe, définie par un épaulement de forme rectangulaire s'étendant au-delà du reste de ladite nervure, c'est-à-dire en débord, et par une interruption de ladite nervure à l'opposé dudit épaulement. Selon ce mode de réalisation, ladite forme d'accueil a ainsi une forme rectangulaire et ladite partie en saillie des moyens de butée est aussi de forme rectangulaire, conférée par deux encoches en saillie disposées en opposition en périphérie desdits moyens de butée, apte à se loger dans ladite forme d'accueil. En particulier lesdits moyens de butée se présentent sous forme d'une plaque de préférence circulaire du type disque ou couronne, présentant des encoches rectangulaires en saillie sur sa circonférence. La nervure de renfort autour de l'orifice a de préférence une forme globalement circulaire, en particulier ovale, hormis la forme d'accueil rectangulaire.

Avantageusement selon l'invention, lorsque la tête de retenue est inclinée par rapport à la tige, le dispositif comprend des moyens de détrompage pour permettre que la tête de retenue soit inclinée dans le bon sens lors de l'encliquetage de l'agrafe dans ledit orifice d'accueil. En particulier lesdits moyens de détrompage comprennent la forme d'accueil de la surface d'accueil autour de l'orifice d'accueil de la structure porte-agrafe, qui est agencée décentrée par rapport au centre de l'orifice, et la partie en saillie desdits moyens de butée qui est agencée décentrée par rapport à l'axe longitudinal de l'agrafe, de sorte que l'agrafe puisse pivoter sur elle-même selon un seul sens lors de son encliquetage dans l'orifice pour que la partie transversale de l'agrafe se loge dans ladite forme d'accueil.

Avantageusement selon l'invention, la deuxième portion de l'agrafe comprend des ouvertures traversantes donnant accès aux harpons de la première portion d'agrafe. De préférence cette deuxième portion comprend des moyens de guidage d'un pointeau passant par une desdites ouvertures. Ces ouvertures peuvent notamment permettre le passage d'un outil pointu pour aller dégager les harpons encliquetés dans la paroi de caisse si nécessaire. En particulier lesdits moyens de guidage se présentent sous forme de surfaces inclinées portées par un élément tronconique dont la plus grande base est dans le prolongement des extrémités proximales des lames d'encliquetage de cette deuxième portion d'agrafe.

L'invention concerne aussi un véhicule automobile comprenant dans son habitacle au moins un montant de baie habillant une paroi de brancard et sous lequel passe un coussin de sécurité gonflable, ledit montant de baie étant fixé à la paroi de brancard qui lui fait face et de manière à pouvoir s'ouvrir pour livrer passage au coussin de sécurité en déploiement, à l'aide d'un dispositif de fixation comprenant une agrafe et une structure porte-agrafe solidaire de la paroi interne du montant de baie, ladite agrafe étant d'une part fixée à la paroi de brancard et d'autre part dans un orifice d'accueil de la structure porte-agrafe, ledit dispositif de fixation étant tel que décrit précédemment.

D'autres particularités et avantages de l'invention ressortiront à la lecture de la description faite ci-après de modes de réalisation particuliers de l'invention, donné à titre indicatif mais non limitatif, en référence aux dessins annexés sur lesquels :
- la figure 1 représente une vue en perspective d'une agrafe d'un dispositif de fixation selon l'invention;
- la figure 1A représente l'agrafe de la figure 1 vue en coupe dans son plan vertical longitudinal;
- la figure 1B représente une vue de la section transversale de la troisième portion de l'agrafe de la figure 1 ;
- la figure 2 représente une vue en perspective d'une structure porte-agrafe du dispositif de fixation selon l'invention apte à coopérer avec une agrafe telle que celle illustrée en figure 1;
- la figure 3 représente une vue en perspective de la mise en place de l'agrafe illustrée en figure 1 avant son introduction dans l'orifice d'accueil de la structure porte-agrafe illustrée en figure 2;
- la figure 4, en suite de la figure 3, illustre une vue en perspective de la mise en place de l'agrafe s'encliquetant dans la structure porte-agrafe ;
- la figure 5 illustre schématiquement un dispositif de fixation suivant l'invention, en référence à la figure 4, en particulier l'implantation de l'agrafe, entre le montant de baie et le brancard d'un véhicule automobile (équipé d'un coussin de sécurité gonflable non gonflé) ;
- la figure 6 illustre un dispositif de fixation suivant l'invention, en référence à la figure 5, quand le montant de baie s'ouvre sous la poussée du coussin de sécurité qui se gonfle et se déploie hors dudit montant ;
- la figure 7 illustre une variante de l'agrafe d'un dispositif de fixation selon l'invention;
- la figure 8 illustre une autre variante de l'agrafe d'un dispositif de fixation selon l'invention.

Les orientations exprimées dans la description des figures sont données en référence au repère XYZ classique du véhicule dans lequel X représente la direction longitudinale avant-arrière du véhicule, orientée vers l'arrière, Y la direction transversale du véhicule, orientée vers la droite, et Z la direction verticale orientée vers le haut du véhicule.

Un repère UVW relatif à l'agrafe du dispositif est également utilisé pour exprimées des orientations dans lequel U représente la direction longitudinale de l'agrafe, orienté de la première portion vers la quatrième portion d'agrafe, V la direction transversale de l'agrafe, et W la direction verticale.

L'invention selon cet exemple est plus particulièrement illustrée dans le cas d'un dispositif de fixation d'un montant de baie de pare-brise à une paroi de brancard d'un véhicule automobile, un coussin de sécurité gonflable, de forme allongée, étant disposé suivant une partie du brancard jusque sous le montant de baie, soit entre la paroi du montant de baie de pare-brise qui se trouve côté habitacle du véhicule et le brancard que forme la paroi de caisse qui longe la baie de pare-brise, un bord longitudinal du pavillon en passant au-dessus de la partie supérieure des vitres latérales, et jusqu'à la lunette arrière. Le montant de baie forme un habillage intérieur de la partie de brancard qui lui fait face, ledit montant s'étendant globalement suivant la direction verticale Z du véhicule, plus ou moins incliné, dans l'habitacle, de la planche de bord au bord transversal avant du pavillon. Le montant de baie est agencé pour pouvoir s'ouvrir au moins selon l'un de ses bords longitudinal sous la poussée du coussin de sécurité qui se gonfle. Le montant de baie a une forme de coque allongée, à section transversale courbe, de convexité tournée vers l'habitacle du véhicule.

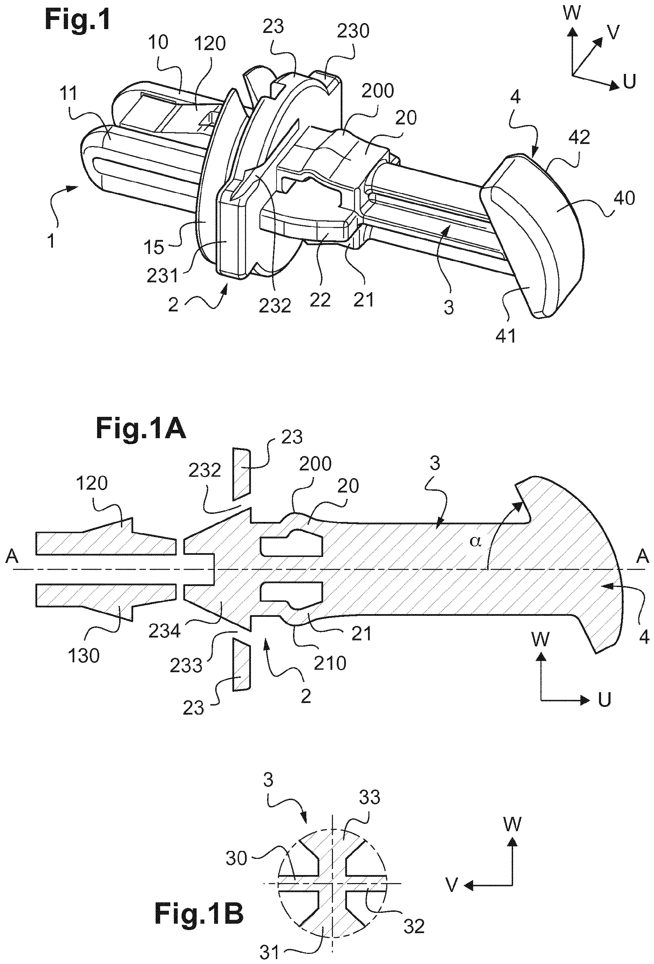

La figure 1 illustre une vue en perspective d'une agrafe d'un dispositif de fixation selon l'invention pour fixer un montant de baie au brancard d'un véhicule, ladite agrafe se fixant entre le brancard du véhicule et une structure porte-agrafe du dispositif de fixation selon l'invention solidaire du montant de baie. La figure 1A illustre l'agrafe représentée en figure 1 suivant une vue en coupe dans son plan longitudinal vertical UW. La figure 1B illustre la troisième portion de l'agrafe selon sa section transversale (dans le plan VW de l'agrafe).

L'agrafe comprend en l'une de ses extrémités, une première portion formant une partie distale de clipage 1 permettant la fixation par encliquetage de l'agrafe dans un évidement réalisé dans la paroi de caisse que forme le brancard, à l'intérieur de l'habitacle.

L'agrafe comprend une deuxième portion 2 formant une partie médiane munie d'un ensemble de moyens de clipage aptes à s'encliqueter dans un orifice d'accueil, c'est-à-dire un trou traversant aux dimensions et forme adaptées, présent dans la structure porte-agrafe du montant de baie.

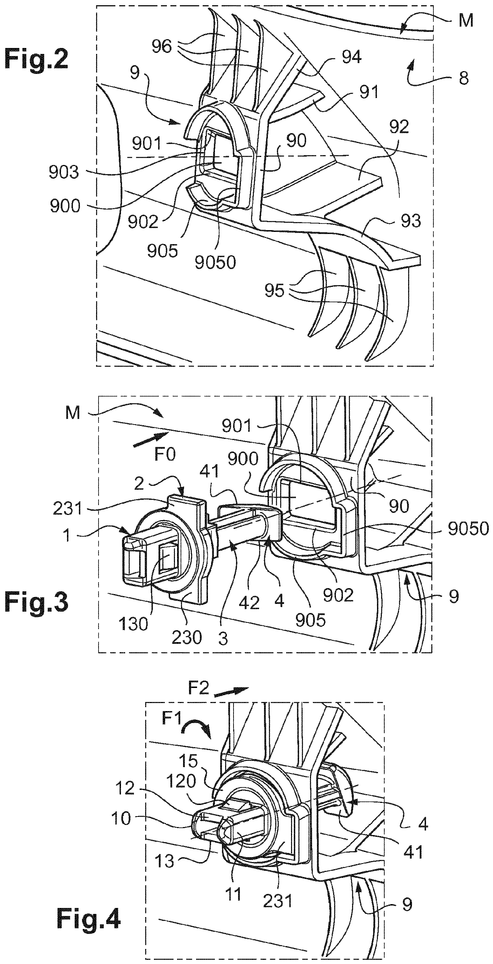

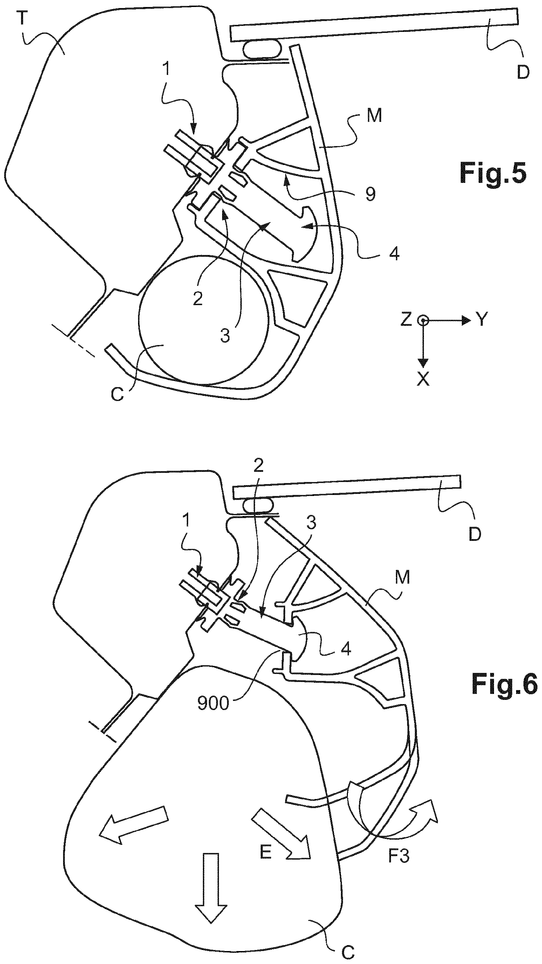

L'agrafe comporte une troisième portion de dévidage se présentant sous forme d'une tige 3, en prolongement de la deuxième portion de clipage 2, qui crée une partie allongée de l'agrafe permettant de donner l'ampleur nécessaire à l'ouverture du montant de baie comme illustré en figure 6 lorsque le coussin de sécurité C se déploie. La longueur de ladite tige est adaptée à l'amplitude requise pour l'ouverture du montant de baie. Cette tige 3 présente un profil en croix et se compose selon l'exemple de quatre branches longitudinales 30, 31, 32, 33, liées ensemble et formant un profil très rigide (voir figure 3). La tige est relativement volumineuse dans sa dimension transversale, sa section transversale s'inscrit dans un cercle d'un diamètre compris entre 7 et 8 millimètres. Cette tige présente ainsi à la fois de la résistance mécanique et de la flexibilité qui la rendent apte à supporter les contraintes d'efforts exercées sur l'agrafe entre le brancard et le porte-agrafe quand le montant de baie s'ouvre.

En l'autre extrémité de l'agrafe, opposée à la partie distale de clipage 1 et en prolongement de la tige de dévidage 3, l'agrafe comporte une quatrième portion de retenue 4 constituée d'un organe de retenue permettant de retenir la structure porte-agrafe à l'agrafe lorsque ladite deuxième portion 2 est déclipée de l'orifice d'accueil sous la poussée du coussin de sécurité qui se gonfle et se déploie en ouvrant le montant de baie, l'agrafe restant ancrée dans le brancard en sa première portion. Cet organe de retenue 4 selon l'exemple est une tête de forme sensiblement rectangulaire qui va être décrite ci-après.

Cette tête de retenue 4 a une forme générale rectangulaire, sa face rectangulaire externe 40 qui se trouve, après fixation à la structure porte-agrafe en regard de la paroi interne du montant de baie, est avantageusement courbe, avec une convexité dirigée vers l'extérieur, c'est-à-dire vers la paroi interne du montant de baie, de manière à ce qu'elle puisse suivre la courbure de ladite paroi du montant de baie. La tête de retenue 4 est dans un plan moyen globalement perpendiculaire à la tige 3 mais elles est avantageusement inclinée par rapport à la tige, suivant un angle α par rapport à l'axe central longitudinal A-A de la tige 3 (soit suivant la direction longitudinale U de l'agrafe), notamment pour être apte à se loger dans l'espace disponible entre la structure porte-agrafe et la paroi de montant, à l'arrière du support d'accueil. Cet angle a une amplitude selon l'exemple d'environ 60 degrés. De plus cet angle est choisi de façon à minimiser les contraintes entre la surface sous la tête et la surface du porte-agrafe retenue par la tête lorsque le montant de baie se déforme sous l'influence du coussin de sécurité (l'airbag) se déployant. En effet, l'angle de la tête anticipe une rotation du montant de baie, retenue par la tête de l'agrafe qui fait pivot et écarte la tôle de structure dans la partie basse du montant de baie.

Le dispositif de fixation en la deuxième portion 2 d'agrafe, comprend en outre des moyens de détrompage coopérant avec l'orifice d'accueil de la structure porte-agrafe afin que la tête de retenue soit inclinée dans le bon sens lors du clipage de l'agrafe dans l'orifice de la structure porte-agrafe, comme cela va être expliqué en détails plus loin dans la description.

Les moyens d'encliquetage de la deuxième portion 2 de l'agrafe se présentent sous forme de deux lames 20, 21 disposées symétriquement de part et d'autre d'un barreau support transversal 22, et orientées suivant la direction longitudinale U de l'agrafe. Chaque lame présente des extrémités de forme courbe qui viennent en appui solidaire sur la face support du barreau de manière à dessiner un espace libre entre ladite lame et le barreau, ce qui autorise une déformation élastique à la lame pour permettre un encliquetage au niveau de la nervure en saillie 200, 210 que chaque lame présente transversalement en surface. Les déformations élastiques respectives des lames disposées en opposition engendrent une compression radiale de cette deuxième portion d'agrafe permettant l'encliquetage de l'agrafe au niveau des nervures des lames dans l'orifice d'accueil de la structure porte-agrafe.

Une butée, formée d'une plaque 23 solidaire du barreau transversal 22 et disposée aux extrémités proximales des lames 20, 21, dans un plan perpendiculaire à la direction longitudinale U de l'agrafe, bloque l'introduction de l'agrafe une fois les nervures d'encliquetage encliquetées dans ledit orifice d'accueil. Cette plaque de butée 23 qui se présente globalement sous forme d'un disque selon cet exemple, comprend deux encoches en saillie 230, 231, disposées en opposition sur la circonférence du disque, suivant la direction transversale V de l'agrafe. Ces encoches confèrent une forme rectangulaire en saillie de la partie principale de la butée, par rapport au reste du pourtour (circulaire) de ladite butée. La direction de cette partie en saillie est ainsi sensiblement perpendiculaire à la direction longitudinale des lames de clipage nervurées 20, 21, et elle est en outre sensiblement perpendiculaire à la direction longitudinale (celle des côtés de plus grande dimension) de la tête de retenue rectangulaire 4. En effet la tête de retenue rectangulaire 4 de l'agrafe est disposée en bout de la tige 3 de sorte que ses bords longitudinaux 41, 42, ceux de la plus grande dimension, soient sensiblement perpendiculaires à ladite partie rectangulaire en saillie de la plaque de butée 23. Cette partie en saillie de la plaque de butée 23 facilite un assemblage de type quart de tour de l'agrafe dans l'orifice d'accueil du porte-agrafe comme expliqué plus loin. Avantageusement selon l'invention, cette forme en saillie, rectangulaire, de la butée 23 est décentrée par rapport à l'axe principal de symétrie de l'agrafe afin de former un moyen de détrompage coopérant avec un autre moyen de détrompage présent autour de l'orifice d'accueil du porte-agrafe comme expliqué plus loin en référence aux figures 3 et 4.

La première portion 1 formant la partie distale de clipage de l'agrafe qui permet la fixation par encliquetage de l'agrafe dans un évidement récepteur prévu dans la paroi de brancard, comprend deux lames longitudinales 10, 11 disposées parallèles et face à face, et deux lames transversales 12, 13 (voir figure 4 par exemple) disposées parallèles et espacées entre lesdites lames longitudinales 10, 11. Ces quatre lames forment un ensemble de forme parallélépipédique creux. Cette partie distale comprend en outre deux harpons 120, 130 en opposition, disposés en saillie des faces externes respectives des lames transversales 12, 13, et à proximité de la deuxième portion de l'agrafe. Ces harpons élastiquement compressibles sont aptes à s'emboîter à force dans l'évidement récepteur de la paroi de brancard. Au montage, cette première portion 1 d'agrafe sera fixée en dernier, après l'encliquetage de l'agrafe dans la structure porte-agrafe, par introduction à force de l'ensemble des quatre lames 10, 11, 12, 13 dans l'évidement de la paroi de brancard, jusqu'à emboîter à force lesdits harpons élastiquement compressibles dans l'évidement récepteur. Cette partie avec harpons est séparée de la butée 23 de la portion d'encliquetage 2 de l'agrafe, par un disque 15 formant une jupe circulaire qui permet de fermer l'évidement récepteur du brancard et qui a notamment une fonction anti-vibrations. Cette portion d'encliquetage 1 permet un ancrage ferme et solide de l'agrafe dans le brancard, et d'une force supérieure à celle de l'encliquetage de la deuxième portion de clipage 2 dans le porte-agrafe, de sorte que cette fixation de l'agrafe au brancard est maintenue lorsque le montant de baie s'ouvre sous la poussée du coussin de sécurité en déploiement.

Avantageusement selon l'invention, la deuxième portion d'encliquetage 2 de l'agrafe, présente des fentes traversantes 232, 233 donnant accès aux harpons de la première portion d'agrafe. Ces fentes sont en outre prolongées par une surface inclinée d'un élément tronconique central 234 faisant guidage pour un outil devant atteindre lesdits harpons. Par exemple un pointeau, tel qu'un un tournevis, introduit à travers l'une des fentes 232, 233 de la plaque 23, est ainsi guidé pour atteindre l'un des harpons 120 ou 130 de la première portion de clipage 1, et venir en appui au niveau du harpon de manière à dégager ledit harpon de la paroi du brancard où est retenue la première portion de l'agrafe et pouvoir ainsi décliper si besoin cette première portion d'agrafe.

L'agrafe coopère avec une structure porte-agrafe illustrée notamment en figure 2 selon une vue en perspective. La structure porte-agrafe 9 est intégrée à la partie intérieure du montant de baie M. Selon cet exemple particulier, la structure est solidaire de la paroi interne 8 du montant de baie par des barres support, 91, 92, disposées sensiblement perpendiculairement à ladite paroi interne 8 et entre lesquelles se situe le support d'accueil 90 de l'agrafe, disposé sensiblement suivant la direction transversale du montant de baie, ledit support d'accueil étant récepteur de l'agrafe en son orifice d'accueil 900. La structure comprend aussi selon cet exemple deux ailes 93 et 94 présentes respectivement entre ledit support d'accueil et de part et d'autre et respectivement les barres 92 et 91. Chaque aile 93, 94 supporte en outre avantageusement une pluralité de nervures de renfort périphériques, respectivement référencées 95, 96, s'étendant de la paroi 8 du montant de baie jusqu'au bord le plus proche du support d'accueil 90, afin de renforcer mécaniquement la structure porte agrafe, notamment lorsque le montant de baie tire sur l'agrafe en s'ouvrant sous la poussée du coussin de sécurité en déploiement. Le coussin de sécurité C qui est en pratique de forme globalement cylindrique lorsqu'il se gonfle, passe sous la structure porte-agrafe, en particulier sous le creux de l'aile 93 le long de la pluralité de nervures périphériques 95.

Le support d'accueil 90 de l'agrafe présente selon l'invention un orifice 900 de forme rectangulaire dont la plus grande dimension correspond à ses bords 901, 902 orientés sensiblement suivant la direction longitudinale du montant de baie. Une nervure de renfort 905 est située autour d'une partie du pourtour de l'orifice, sur la face d'accueil du support d'accueil de l'agrafe, soit la face par où s'introduit l'agrafe et contre laquelle se plaque la butée 23 de l'agrafe. Cette nervure 905 a pour rôle premier de renforcer le support d'accueil 90 qui subit de fortes tensions lorsque le porte-agrafe tire sur l'agrafe sous la poussée du coussin de sécurité en déploiement. La nervure de renfort 905 du support d'accueil de l'agrafe a une forme globalement ovale mais qui présente suivant l'un de ses côtés de plus petite dimension un épaulement 9050 de forme rectangulaire s'étendant au-delà du reste de la nervure. En outre ladite nervure de renfort 905 du support d'accueil de l'agrafe s'interrompt sur un de ses côtés de plus petite dimension, à l'opposé de l'épaulement rectangulaire 9050. Cet épaulement 9050 et l'interruption de nervure dessinent, en face d'accueil autour de l'orifice, une forme d'accueil rectangulaire, qui est apte à recevoir intérieurement la partie en saillie, rectangulaire, de la butée 23 de l'agrafe.

Les figures 3 et 4 illustrent selon une vue en perspective respectivement l'agrafe en position correcte pour être introduite dans l'orifice 900 de la structure porte-agrafe, et l'agrafe une fois fixée dans l'orifice d'accueil suivant un assemblage quart de tour.

La tête de retenue rectangulaire 4 de l'agrafe, présente en bout de la tige 3 avec ses bords longitudinaux 41, 42 sensiblement perpendiculaires à la plus grande dimension de l'organe de détrompage de l'agrafe que présente la butée 23 par sa partie rectangulaire en saillie et excentrée, dessinée par les encoches en saillie 230, 231, est introduite, par un mouvement de translation (flèche F0 de la figure 3) suivant son axe longitudinal A-A, dans l'orifice d'accueil 900 de la structure porte-agrafe afin que lesdits bords longitudinaux 41, 42 passent entre et parallèlement aux bords longitudinaux 901, 902 (ceux de plus grande dimension) de l'orifice d'accueil 900. L'agrafe est ensuite pivotée sur elle-même autour de son axe longitudinal suivant un mouvement de rotation de 90 degrés, vers la droite de la figure (flèche F1 en figure 4) dans ledit orifice 900 de sorte que la forme de détrompage de l'agrafe vienne se positionner en correspondance avec ladite forme d'accueil transversale en face d'accueil du support d'accueil 90, l'encoche 231 de l'agrafe venant se positionner dans l'épaulement rectangulaire 9050 de la nervure de renfort 905 lorsqu'on pousse ensuite en translation (flèche F2 en figure 4) l'agrafe selon son axe longitudinal (en correspondance avec l'axe de l'orifice) dans l'orifice d'accueil pour introduire la partie radialement compressible de la deuxième portion 2 de l'agrafe dans cet orifice jusqu'à l'encliquetage des lames nervurées 20, 21 et appui de la butée 23 contre la face d'accueil. Selon ce montage de l'agrafe, la tête de retenue 4 a tourné d'un quart de trou vers la droite par rapport à sa position d'introduction dans l'orifice de sorte que ses bords longitudinaux 41, 42 se retrouvent parallèles aux bords transversaux (de plus petite dimension) de l'orifice d'accueil 900. Ainsi l'inclinaison de la tête 4 se trouve orientée de manière à pouvoir se loger au mieux dans l'espace entre l'arrière du support d'accueil 90 et la paroi interne 8 du montant de baie.

Si l'agrafe est introduite dans l'orifice d'accueil en tournant vers la gauche lors de sa fixation dans l'orifice, la forme de détrompage excentrée de l'agrafe se trouve venir en appui contre la nervure de renfort 905 qui l'empêche de pouvoir se loger dans la forme d'accueil du support d'accueil du porte agrafe, excentrée de l'axe de l'orifice d'accueil, et donc qui s'oppose à emboîter à force l'agrafe dans l'orifice d'accueil. Ces moyens de détrompage permettent ainsi à un opérateur fixant l'agrafe dans le porte-agrafe de constater immédiatement son erreur.

Comme commenté au cours de la description des figures 1 à 4, les figures 5 et 6 illustrent selon une vue en coupe transversale, suivant le plan XY du véhicule, l'ensemble brancard T et montant de baie M intégrant une structure porte-agrafe 9 qui coopère avec une agrafe du dispositif de fixation selon l'invention retenant le montant de baie au brancard en position passive selon la figure 5, et en position active selon la figure 6 dans laquelle le dispositif permet de retenir le montant de baie tout en lui permettant de s'ouvrir sous la poussée du coussin de sécurité C. Le montant de baie M est implanté de la planche de bord, en bordure de la baie de pare-brise D, jusqu'au bord transversal du pavillon présent au-dessus de la baie de pare-brise, et articulé de manière connue en soi pour pouvoir s'ouvrir selon certains de ses bords par rapport au brancard auquel il est fixé. Avantageusement selon l'invention, le montant peut comprendre une articulation laissant l'extrémité du bord longitudinal du montant s'ouvrir selon la flèche F3 en figure 6, pour agrandir le passage pour le coussin de sécurité en déploiement.

Selon le dispositif de fixation, l'agrafe est fixée en sa première portion 1 dans un évidement adapté de la structure du brancard en tôle et encliquetée en sa deuxième portion 2 dans l'orifice d'accueil 900 de la structure porte-agrafe 9. Sous la poussée du coussin de sécurité C en déploiement selon les flèches E, le montant de baie tire sur l'agrafe qui se déclipe de l'orifice d'accueil en sa portion 2, tout en restant maintenue d'une part au brancard du fait notamment que les harpons de la portion 1 assurent une plus fort ancrage que les moyens d'encliquetage en portion 2, et d'autre part à la structure porte-agrafe grâce à la tête de retenue 4, de sorte que le montant s'ouvre tout en restant retenu au brancard, la tige 3 de l'agrafe apportant de la longueur pour gérer l'amplitude de l'ouverture partielle du montant de baie. La tige 3 est suffisamment à la fois résistante mécaniquement et flexible pour ployer sans se casser lorsque le montant tire sur l'agrafe. La souplesse aux extrémités proximales des lames d'encliquetage 20, 21 au niveau de la deuxième portion 2 de l'agrafe et par ailleurs une solidité apportée par le barreau plein transversal 22 supportant lesdites lames contribuent ensemble à donner la résistance mécanique et la flexibilité à l'agrafe pour supporter les contraintes d'efforts auxquelles elle est soumise.

Les passagers du véhicule sont ainsi protégés notamment au niveau de leur tête par le coussin qui s'est déployé, mais sans risque que le montant de baie vienne les heurter.

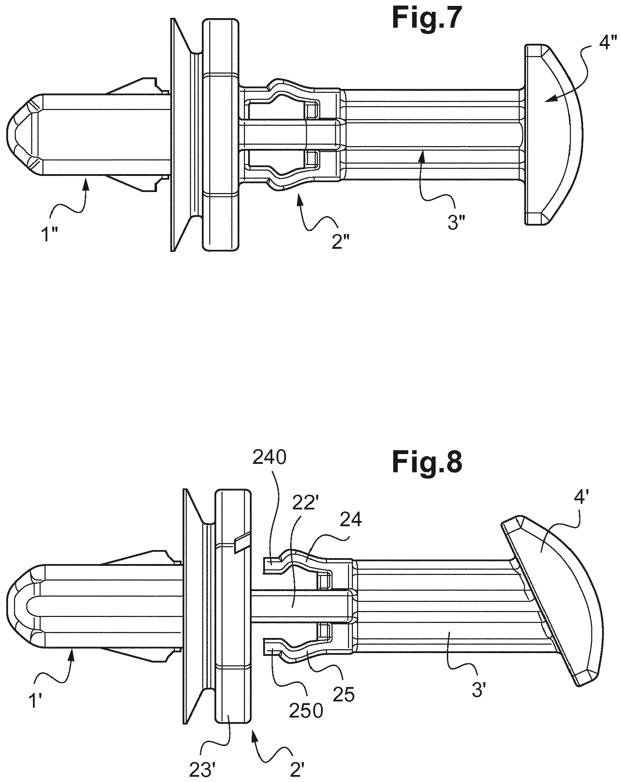

La figure 7 représente une variante de l'agrafe d'un dispositif de fixation selon l'invention qui comporte, à la différence de l'agrafe illustrée en figure 1, une deuxième portion d'encliquetage 2' dont les lames d'encliquetage 24, 25 sont disposées de part et d'autre d'un barreau support transversal 22' mais sans y être maintenues en leur extrémité proximale 240, 250. En d'autres termes, les lames sont maintenues en leur extrémité distale courbe solidaire du barreau, alors que leur pied 240, 250 est sectionné, de sorte que lesdits pieds de lames sont libres. Cet agencement libre de l'extrémité proximale des lames apporte une plus grande flexibilité à l'agrafe qui s'avère, comme déjà expliqué, très importante lorsque l'agrafe est déclipée de l'orifice d'accueil du porte-agrafe sous la poussée du coussin de sécurité et que ladite agrafe est soumise à des tensions en cette deuxième portion. Cet agencement libre des extrémités proximales des lames permet de mieux s'adapter aux diverses formes que peuvent prendre les bords de l'orifice d'accueil de la structure porte-agrafe. La première portion de clipage 1', la troisième portion de dévidage 3', la quatrième portion de retenue 4', et la butée 23' en deuxième portion sont par ailleurs conçues comme celles correspondantes de l'agrafe représentée en figure 1. La tête de retenue pourrait être droite, c'est-à-dire non inclinée comme celle de l'agrafe illustrée en la figure 8 décrite ci-après.

La figure 8 représente une variante possible mais non préférée d'une agrafe d'un dispositif de fixation selon l'invention, cette agrafe comportant, à la différence de l'agrafe précédemment décrite aux figures 1, une tête de retenue 4" qui n'est pas inclinée vers la tige. Cette tête est donc à angle droit avec la tige. La première portion de clipage 1", la deuxième portion d'encliquetage 2", et la troisième portion de dévidage 3" sont par ailleurs conçues comme les portions correspondantes de l'agrafe représentée en figure 1. Dans ce cas où la tête de retenue n'est pas inclinée, les moyens de détrompage du dispositif de fixation ne sont pas nécessaires.

L'agrafe du dispositif de fixation selon l'invention est avantageusement réalisée sous forme d'un monobloc, par exemple par moulage d'une matière plastique, en particulier à base de polyoxyméthylène. L'agrafe est compacte, par exemple sa longueur peut être de l'ordre de 50 mm et sa plus grande largeur de l'ordre de 25 mm.

Dans la description, les notions de « cliper » et « encliqueter » sont employées de manière équivalente au sens de « s'emboîter à force ».

L'invention a atteint les objectifs fixés en fournissant un dispositif de fixation offrant une grande solidité et par conséquent une plus grande sécurité pour les passagers.

Le dispositif de fixation présente les qualités requises pour une bonne fixation par encliquetage, notamment pour l'encliquetage de l'agrafe dans l'orifice d'accueil de la structure porte-agrafe permettant de la décliper de l'orifice d'accueil dans une plage d'efforts prévisibles. L'encliquetage est assez fort pour garantir la fixation de la pièce d'habillage tout en étant suffisamment faible pour libérer le montant de baie dès le début du gonflement du coussin de sécurité. L'agrafe présente aussi les caractéristiques recherchées pour avoir un clipage au montage, grâce à ces moyens d'encliquetage de sa deuxième portion 2, qui soit franc mais pas trop difficile à réaliser, ainsi l'opérateur qui fixe l'agrafe dans le porte-agrafe est certain d'avoir bien encliqueté l'agrafe tout en évitant la fatigue de ses doigts qui peuvent faire des dizaines de montages par heure.

## Revendications

1. Dispositif de fixation d'un montant d'habillage (M) de l'habitacle d'un véhicule automobile, en particulier un montant de baie, à une paroi de caisse (T) du véhicule, en particulier une paroi de brancard, un coussin de sécurité gonflable (C) étant présent sous ledit montant, ledit dispositif comprenant une agrafe de fixation coopérant avec une structure porte-agrafe, ladite agrafe étant apte à se solidariser d'une part à ladite paroi de caisse et d'autre part à ladite structure porte-agrafe solidaire dudit montant d'habillage, ladite agrafe étant du type présentant une première portion (1) munie de harpons (120, 130) aptes à s'encliqueter dans la paroi de caisse, une deuxième portion (2) apte à s'encliqueter dans un orifice d'accueil (900) de la structure porte-agrafe (9), une troisième portion de dévidage (3) prolongée d'une quatrième portion (4) sous forme d'un organe de retenue apte à retenir l'agrafe à la structure porte-agrafe lorsque la deuxième portion est libérée de l'orifice d'accueil sous la poussée du coussin de sécurité qui se gonfle pour permettre une ouverture du montant d'habillage, et livrer passage au coussin de sécurité en déploiement, l'amplitude de l'ouverture dudit montant étant contrôlée par la troisième portion de l'agrafe, ledit dispositif étant **caractérisé en ce que** ladite deuxième portion d'agrafe apte à s'encliqueter dans ledit orifice d'accueil de la structure porte-agrafe comprend deux lames longitudinales (20, 21), élastiquement déformables, présentant chacune une extrémité distale et une extrémité proximale et une nervure transversale d'encliquetage (200, 210) située entre lesdites extrémités, lesdites lames étant montées en opposition de part et d'autre et solidairement d'un barreau support (22) de manière à rendre lesdites lames radialement compressibles, l'extrémité proximale de chaque lame étant située à proximité de moyens de butée transversaux (23) apte à venir en appui contre la surface d'accueil autour de l'orifice d'accueil (900) une fois l'agrafe encliquetée dans ledit orifice d'accueil.

2. Dispositif de fixation selon la revendication 1, **caractérisé en ce que** chaque lame de ladite deuxième portion de l'agrafe est solidaire du barreau support (22) en ses extrémités proximale et distale de forme courbe.

3. Dispositif de fixation selon la revendication 1, **caractérisé en ce que** chaque lame longitudinale (20, 21) de ladite deuxième portion d'agrafe n'est solidaire du barreau support qu'en son extrémité distale courbe, son extrémité proximale étant libre.

4. Dispositif de fixation selon l'une des revendications 1 à 3, **caractérisé en ce que** la troisième portion de dévidage (3) de l'agrafe est formée par une tige (3), de préférence composée de plusieurs branches (30, 31, 32, 33), en particulier agencées en croix.

5. Dispositif de fixation selon l'une des revendications 1 à 4, **caractérisé en ce que** la quatrième portion (4) de l'agrafe présente un organe de retenue constituée d'une tête de forme rectangulaire, et de préférence ladite tête étant disposée au bout de ladite tige (3) de sorte que ses plus grands côtés (41, 42) sont sensiblement dans un plan formant un angle (α) avec l'axe longitudinal (A-A) de ladite tige ayant une amplitude comprise entre 30 et 90 degrés.

6. Dispositif de fixation selon la revendication 5, **caractérisé en ce que** la tête de retenue (4) est inclinée vers la tige de sorte que ses plus grands côtés (41, 42) sont sensiblement dans un plan formant un angle (α) avec l'axe longitudinal de ladite tige ayant une amplitude comprise entre 30 et 80 degrés, de préférence entre 30 et 70 degrés.

7. Dispositif de fixation selon l'une des revendications 1 à 6, **caractérisé en ce que** la structure porte-agrafe (9) comprend un orifice d'accueil (900) de l'agrafe de forme rectangulaire apte à laisser passer la tête de retenue de l'agrafe introduite en présentant les côtés de plus grande dimension (41, 42) de ladite tête parallèlement aux bords de plus grand dimension de l'orifice (901, 902), et apte à retenir ladite agrafe une fois pivotée sur elle-même autour de son axe longitudinal (A-A) suivant un mouvement de rotation de 90 degrés dans le plan de l'orifice et un mouvement de translation suivant la direction axiale de l'orifice amenant ladite agrafe à travers ledit orifice d'accueil jusqu'à encliquetage des nervures (200, 210) des lames d'encliquetage (20, 21) de la deuxième portion de l'agrafe, lesdits moyens de butée (23) de la deuxième portion venant en appui contre la face d'accueil autour dudit orifice d'accueil, les côtés de plus grande dimension (41, 42) de ladite tête devenant alors perpendiculaires aux bords de plus grand dimension (901, 902) dudit orifice.

8. Dispositif de fixation selon l'une des revendications 1 à 7, **caractérisé en ce que** la face d'accueil autour de l'orifice d'accueil (900) de la structure porte-agrafe présente une forme d'accueil apte à loger une partie en saillie desdits moyens de butée de l'agrafe de forme similaire à l'intérieur de la forme d'accueil.

9. Dispositif de fixation selon la revendication 8, **caractérisé en ce que** la structure porte-agrafe comprend une nervure de renfort (905) disposée autour de l'orifice d'accueil sur la face d'accueil contre laquelle viennent s'appuyer les moyens de butée (23) de la deuxième portion de l'agrafe, ladite nervure de renfort incluant ladite forme d'accueil de ladite partie en saillie des moyens de butée de la deuxième portion de l'agrafe, définie par un épaulement (9050) de forme rectangulaire qui s'étend au-delà du reste de ladite nervure de renfort et par une interruption de la nervure à l'opposé dudit épaulement (9050), et ladite partie en saillie desdits moyens de butée étant de forme rectangulaire, conférée par deux encoches en saillie (230, 231) disposées en opposition en périphérie desdits moyens de butée, apte à se loger dans ladite forme d'accueil.

10. Dispositif de fixation selon l'une des revendications 6 à 9, **caractérisé en ce qu'**il comprend des moyens de détrompage pour permettre que la tête de retenue soit inclinée dans le bon sens une fois l'agrafe encliquetée dans ledit orifice d'accueil.

11. Dispositif de fixation selon la revendication 10 et l'une des revendications 8 à 9, **caractérisé en ce que** lesdits moyens de détrompage comprennent la forme d'accueil de la surface d'accueil autour de l'orifice d'accueil de la structure porte-agrafe, qui est agencée décentrée par rapport au centre de symétrie de l'orifice, et la partie en saillie des moyens de butée de la deuxième portion d'agrafe qui est agencée décentrée par rapport à l'axe longitudinal de l'agrafe, de sorte que l'agrafe puisse pivoter sur elle-même selon un seul sens de rotation lors de son encliquetage dans l'orifice pour que ladite partie en saillie de l'agrafe se loge dans ladite forme d'accueil.

12. Dispositif de fixation selon l'une des revendications 1 à 9, **caractérisé en ce que** la deuxième portion de l'agrafe comprend des ouvertures transversantes (232, 233) donnant accès aux harpons (120, 130) de la première portion d'agrafe, et de préférence cette deuxième portion comprend des moyens de guidage d'un pointeau apte à passer par une desdites ouvertures.

13. Dispositif de fixation selon la revendication 12, **caractérisé en ce que** lesdits moyens de guidage se présentent sous forme de surface inclinées portées par un élément tronconique (234) dont la plus grande base est dans le prolongement des extrémités proximales des lames d'encliquetage de cette deuxième portion d'agrafe.

14. Véhicule automobile comprenant dans son habitacle au moins un montant de baie (M) habillant une partie de brancard (T) et sous lequel passe un coussin de sécurité gonflable (C), ledit montant de baie étant fixé à la paroi de brancard qui lui fait face de manière à pouvoir s'ouvrir pour livrer passage au coussin de sécurité en déploiement, à l'aide d'un dispositif de fixation comprenant une agrafe et une structure porte-agrafe (9) solidaire de la paroi interne (8) du montant de baie, ladite agrafe étant d'une part fixée à la paroi de brancard et d'autre part dans un orifice d'accueil (900) de ladite structure porte-agrafe, **caractérisé en ce que** ledit dispositif est défini à l'une des revendications 1 à 13.
